Europäisches Patentamt

European Patent Office

Office européen des brevets

(19)

(11) Veröffentlichungsnummer: **0 413 288 A2**

# (12) EUROPÄISCHE PATENTANMELDUNG

(21) Anmeldenummer: 90115520.0

(22) Anmeldetag: 13.08.90

(51) Int. Cl.5: **G11B 15/02**, G11B 27/28, G11B 27/10, G11B 27/34

(30) Priorität: 17.08.89 DE 3927100

(43) Veröffentlichungstag der Anmeldung:
20.02.91 Patentblatt 91/08

(84) Benannte Vertragsstaaten:
**AT DE FR GB NL**

(71) Anmelder: **Nokia Unterhaltungselektronik**

(Deutschland) GmbH
Östliche Karl-Friedrich-Strasse 132
D-7530 Pforzheim(DE)

(72) Erfinder: **Reime, Gerd**
Kelterstrasse 39 a
D-7131 Wurmberg(DE)

(54) **Videorecorder mit automatischem Suchlauf.**

(57) Ein Videorecorder weist ein Laufwerk (10) zum Antreiben eines Video-Magnetbandes, eine Bandstandserfassungseinrichtung (11) und eine Laufwerk-Steuereinrichtung (13) auf. Letztere weist eine Automatik-Betriebsart auf, in der sie das Aufzeichnen von Videostücken nur ab solchen Bandpositionen zuläßt, die um ein ganzzahliges Vielfaches eines fest vorgegebenen Bandabschnittswertes hinter einem Bandaufzeichnungsanfang liegen.

Der fest vorgegebene Bandabschnittswert beträgt z.B. zwei Stunden. Dies hat zur Folge, daß das Videoband in Bandabschnitte von jeweils zwei Stunden Spieldauer eingeteilt wird. Ausschließlich die Anfänge dieser Bandabschnitte werden vom Videorecorder angefahren, wenn Videostücke aufgezeichnet werden sollen.

Dem Benutzer werden auf einem Bildschirm in einer Liste die Titel der aufgenommenen Videostücke in ihrer Aufnahmereihenfolge angezeigt. Am Ende der Liste wird dargestellt, wieviele Bandabschnitte noch frei sind. Sieht der Benutzer, daß Bandabschnitte frei sind und will er ein Videostück aufzeichnen, gibt er dem Videorecorder eine entsprechende Anweisung. Der Videorecorder sucht dann selbständig einen freien Bandabschnitt.

Fig. 1

## VIDEORECORDER MIT AUTOMATISCHEM SUCHLAUF

### TECHNISCHES GEBIET

Die Erfindung betrifft einen Videorecorder, mit dem es möglich ist, eine vorgegebene Bandposition automatisch anzufahren.

### STAND DER TECHNIK

Eine gewünschte anzufahrende Bandposition kann bei bekannten Videorecordern auf verschiedene Art vorgegeben werden. Üblich ist es, den Bandstand in Minuten und Sekunden ab dem Anfang des Videomagnetbandes einzugeben. Bei anderen Geräten kann die fortlaufende Anzahl von Steuerimpulsen einer Steuerspur ab dem Bandanfang als vorgegebener Bandstand eingegeben werden (DE-US2814721). Diese Steuerimpulse kennzeichnen den Anfang eines Videobildes und sind zur Synchronisierung des Bandlaufes vorgesehen. Die vorgegebene Position wird in beiden Fällen dadurch gefunden, daß das Laufwerk das Videomagnetband antreibt, eine Bandstandserfassungseinrichtung laufend den Bandstand erfaßt und eine Laufwerk-Steuereinrichtung das Laufwerk dann stoppt, wenn der erfaßte Bandstand mit dem eingegebenen Bandstand übereinstimmt. Der Benutzer derartiger Geräte muß sich jedoch den Bandstand des Anfanges eines Videostückes, das er aufzeichnen will, merken oder notieren, damit er später wieder die anzufahrende Bandposition des Anfangs des aufgezeichneten Videostückes einstellen kann.

Aus der DE-PS-3742469 ist es bekannt, am Anfang aufgezeichneter Videostücke eine Anfangsmarkierung auf dem Videoband aufzuzeichnen. Das Aufzeichnen von Markierungen am Anfang von Videostücken hat den Vorteil, daß sich der Bediener nur merken oder notieren muß, in welcher Reihenfolge er Videostücke aufgezeichnet hat. Zum Anfahren eines Videostückes ist es lediglich erforderlich abzuzählen, um wieviele Videostücke vorwärts oder rückwärts gespult werden soll. Wenn bei einem Videorecorder, der eine Markierung am Anfang von Videostücken anfährt, ein zusätzliches Videostück aufgenommen werden soll, muß die Bandposition des Endes des letzten Videostückes vom Bediener gesucht werden. Die bekannten Geräte sind nämlich nicht dazu in der Lage, das Ende des zuletzt aufgezeichneten Videostückes automatisch anzufahren, um ab dort mit dem Aufzeichnen eines neuen Stückes zu beginnen (DE-PS 3742469). Es sind Geräte bekannt, bei denen zum zielgenauen Anfahren der Bandposition einer Anfangsmarkierung die gewünschte Bandposition zunächst in einem schnellen Lauf ohne Bandabtastung in etwa angefahren wird, dann auf einen schnellen Suchlauf umgeschaltet wird, in dem das Band abgetastet wird und dabei mit Hilfe von Adressdaten der Anfang eines aufgezeichneten Videostückes genau angefahren wird (z.B. DE-PS 3742471).

Bei allen bisher genannten Videorecordern treten u.a. folgende Probleme beim Bedienen auf. Der Bandabstand für das Ende des letzten Videostückes auf dem Videoband muß von Hand eingegeben werden, wenn hinter dem bisher letzten Videostück ein nächstes Videostück aufgenommen werden soll. Weiterhin hat sich herausgestellt, daß auf Dauer gesehen der Austausch von Videostücken auf einem Videoband schwierig ist. Sind z.B. drei Videostücke hintereinander aufgenommen, mit einer Länge von 45 Minuten, 30 Minuten und 45 Minuten, und sind die beiden Videostücke mit jeweils 45 Minuten uninteressant geworden, können diese beiden Videostücke nicht mit einem längeren Videostück überspielt werden, da das Videostück von 30 Minuten Dauer dazwischen liegt. Es muß also abgewartet werden, bis ein Videostück aufgenommen werden soll, dessen Dauer maximal 45 Minuten beträgt. Es hat sich aber herausgestellt, daß Benutzer in der Praxis nicht dauernd ihre Kassetten dahin untersuchen, wo sich ein überspielbares Videostück befindet, dessen Länge in etwa so lang ist, jedoch nicht kürzer als ein neu aufzunehmendes Videostück. Es wird eher mit dem Aufzeichnen auf eine neue Kassette begonnen.

Die vorstehend genannten Mängel werden für die praktische Bedienung umso gravierender, je länger das verwendete Band ist. Vor einigen Jahren wurden Videorecorder zum Benutzen mit sogenannten Wendekassetten im Markt eingeführt. Eine solche Kassette kann bis zu vier Stunden Spieldauer auf jeder Seite, also insgesamt acht Stunden aufweisen. Außerdem wurden vor einigen Jahren Videorecorder eingeführt, die nicht nur in der üblichen Standardbetriebsart, sondern auch in einer sogenannten Longplay-Betriebsart verwendbar sind, bei der die doppelte Laufdauer, verglichen zur Standardlaufdauer erzielt wird, also z.B. eine Laufdauer von acht Stunden für ein 240-Minuten-Band. Würde die Wendekassetten-Ausführung mit der Longplay-Ausführung kombiniert, wäre eine Gesamtlaufdauer von 16 Stunden erzielbar. Derartige Modelle wurden jedoch am Markt nicht eingeführt, da sich bereits bei Spieldauern von acht Stunden herausgestellt hat, daß die Kassetteninhaltsverwaltung für die Benutzer zu mühselig wird.

Aus dem vorstehenden ist erkennbar, daß seit längerer Zeit das Problem bestand, Videorecorder so auszugestalten, daß sie eine besonders übersichtliche Kassetteninhaltsverwaltung ermöglichen.

## DARSTELLUNG DER ERFINDUNG

Der erfindungsgemäße Videorecorder weist eine Automatik-Betriebsart der Laufwerk-Steuereinrichtung des Videorecorders auf, in der sie das Aufzeichnen von Videostücken nur ab solchen Bandpositionen zuläßt, die um ein ganzzahliges Vielfaches eines fest vorgegebenen Bandabschnittswertes hinter einem Bandaufzeichnungsanfang liegen.

Die in die Bandabschnittsbetriebsart eingestellte Laufwerk-Steuereinrichtung sorgt dafür, daß beim Aufzeichnen von Videostücken das Videoband in mehrere Bandabschnitte fest vorgegebener Länge aufgeteilt wird. Der erste Bandabschnitt beginnt entweder am Bandanfang, in welchem Fall der Aufzeichnungs-Bandanfang mit dem tatsächlichen Bandanfang übereinstimmt, oder der erste Bandabschnitt beginnt eine vorgegebene Anfangsbandlaufzeit hinter dem Bandanfang, in welchem Fall Aufzeichnungs-Bandanfang und tatsächlicher Bandanfang nicht übereinstimmen. In diesem letzteren Fall können vor dem ersten Bandabschnitt Daten über die aufgezeichneten Videostücke abgespeichert sein.

Zum Veranschaulichen der Vorteile, die mit dem erfindungsgemäßen Videorecorder erzielt werden, sei angenommen, daß im Longplay-Verfahren, also mit halber Standardaufnahmegeschwindigkeit, ein Band von 240 Minuten Standardlaufdauer, also acht Stunden Longplay-Laufdauer, eingesetzt wird. Der Videorecorder gebe einen Bandabschnittswert von zwei Stunden für jeden Bandabschnitt fest vor.

Dem Benutzer sei aus Handaufzeichnungen bekannt, daß bereits in drei Bandabschnitte Videostücke aufgezeichnet sind. Will er nun ein neues Videostück einfügen, braucht er lediglich einzugeben, daß der vierte Bandabschnitt angefahren werden soll. Will er das Videostück im zweiten Bandabschnitt überschreiben, gibt er entsprechend ein, daß der zweite Bandabschnitt angefahren werden soll. Der Benutzer braucht sich also nicht darum zu kümmern, wie lange einzelne Stücke genau sind und wo sie konkret enden, sondern er braucht nur die Nummer eines Bandabschnittes für den Beginn der Aufzeichnung einzugeben.

In einer vorteilhaften Ausbildung eines erfindungsgemäßen Videorecorders liest der Videorecorder selbständig das Inhaltsverzeichnis am Bandanfang oder aus einer anderen Speicherstelle in einen Verzeichnisspeicher des Videorecorders. Sobald das Inhaltsverzeichnis gelesen ist, wird es dem Benutzer in einer Liste auf dem Bildschirm dargestellt, die zugleich anzeigt, wieviele Bandabschnitte noch frei sind. Ist ein Bandabschnitt frei, kann der Benutzer einen Aufzeichnungswunsch programmieren. Der Benutzer braucht noch nicht einmal die Nummer eines Bandabschnittes einzugeben. Das Gerät sucht dann selbständig, welcher Bandabschnitt belegt werden kann. Ist kein Bandabschnitt mehr frei, braucht der Benutzer nur einzugeben, welches Videostück überspielt werden soll. Der Videorecorder ermittelt dann aus dem Inhaltsverzeichnis, in welchem Bandabschnitt dieses Videostück abgelegt ist, und fährt diesen Bandabschnitt zum Aufzeichnen eines neuen Videostückes an. Nach jedem Ändern des Bandinhaltes bringt der Videorecorder in einer besonderen Ausbildung das genannte Inhaltsverzeichnis auf den neuesten Stand.

Wollte ein Benutzer bei bekannten Videogeräten einen automatischen Suchlauf starten, mußte er zuvor eine gewünschte Bandposition eingeben, oder er mußte Markierungen gesetzt haben, die dann automatisch angefahren werden konnten. Beim Benutzen eines erfindungsgemäßen Videorecorders können dagegen vorgegebene Bandpositionen angefahren werden, ohne daß vorher eine Bandposition eingegeben worden ist oder daß Markierungen zuvor gesetzt worden sind. Dies ist dadurch möglich, daß der Videorecorder einen festen vorgegebenen Bandabschnittswert und/oder ganzzahlige Vielfache davon als ausschließlich mögliche Bandpositionen speichert. Daher reicht es aus, in den Videorecordern beispielsweise einzugeben, daß ab dem fünften Bandabschnitt ein Videostück aufgezeichnet werden soll. Der Beginn des fünften Bandabschnittes wird dann angefahren, ohne daß der Benutzer dessen Bandposition kennt und ohne daß er die zugehörige Stelle des Videobandes zuvor markiert hat. Bei einer Ausführungsform des Videorecorders mit einem Inhaltsverzeichnis im einliegenden Videoband, das vom Videorecorder gelesen wird, hat es der Benutzer noch einfacher. Er braucht nämlich lediglich den Titel oder die Titeldaten oder je nach der Art der diesbezüglichen Datenverarbeitung des Videorecorders noch einfacher, die Listennummer des gewünschten Videostückes einzugeben. Der Videorecorder sucht dann selbsttätig im Inhaltsverzeichnis, in welchem Bandabschnitt dieses Videostück abgespeichert ist und fährt diesen Bandabschnitt selbsttätig an.

Um die Anfänge der Bandabschnitte, ab denen bereits aufgezeichnet wurde, automatisch exakt wiederfinden zu können, ist es von Vorteil, einen Programmablauf der Automatik-Betriebsart der Laufwerk-Steuereinrichtung zu verwenden, der bei jedem Anfang eines freien Bandabschnittes eine Anfangsmarkierung setzt. In einem Suchlauf wird das Videoband durch eine Markierungssucheinrichtung auf eine gewählte Anfangsmarkierung hin abgetastet und bei Erreichen der Anfangsmarkierung wird der Suchlauf beendet. Wird der Anfang eines Bandabschnittes erstmals angefahren, der demgemäß noch keine Markierung trägt, wird eine solche gesetzt, wenn die Markierungssucheinrichtung innerhalb eines vorgegebenen Bandbereich, in dem der Anfang dieses Bandabschnittes liegen muß, keine Markierung findet. Es kann aber auch in dem bereits genannten abgespeicherten Inhaltsverzeichnis registriert sein, am Anfang welcher Bandabschnitte Markierungen gesetzt sind. Soll dann der Anfang eines Bandabschnittes angefahren werden, der gemäß dem Speicherinhalt noch keine Markierung trägt, werden lediglich die entsprechenden ganzzahligen Vielfache des Bandabschnittswertes ab dem Aufzeichnungs-Bandanfang abgemessen und bei Erreichen der diesem Abmessen entsprechenden Bandposition wird der Bandschnellauf beendet und eine neue Anfangsmarkierung gesetzt.

## BEZEICHNUNG DER FIGUREN

Fig. 1 Blockschaltbild von Funktionsgruppen eines Videorecorders, die für einen automatischen Suchlauf auf einem Videoband mit markierten Bandabschnitten erforderlich sind;
Fig. 2 Schematisches Diagramm eines in Bandabschnitte aufgeteilten Video-Magnetbandes;
Fig. 3a, 3b Darstellung von Bildschirmanzeigen vor (a) bzw. nach (b) dem Löschen eines auf ein Video-Magnetband gem. Fig. 2 aufgezeichneten Videostückes.

## AUSFÜHRUNGSBEISPIELE DER ERFINDUNG

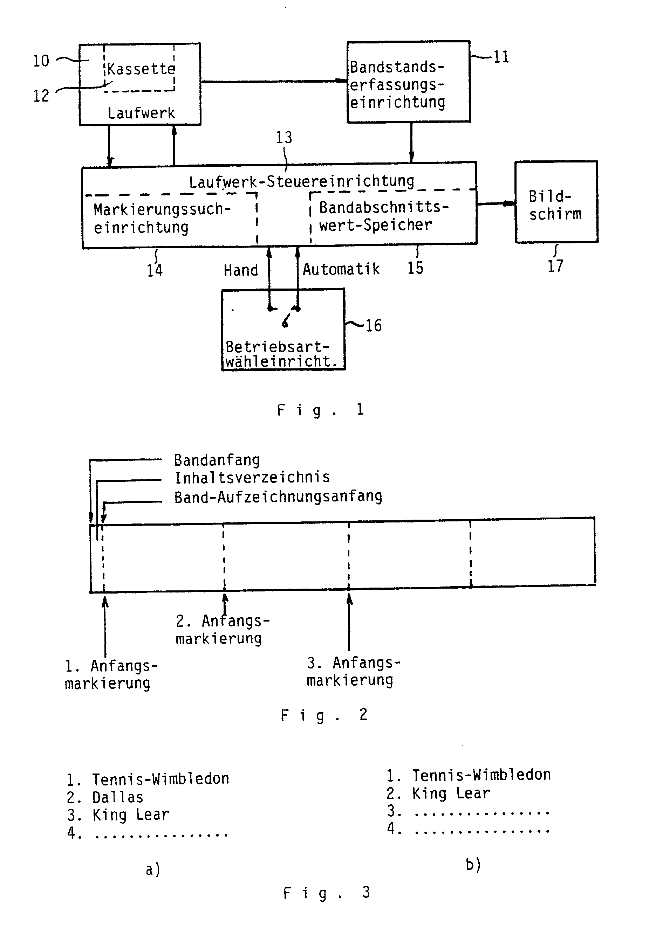

Die in Fig. 1 dargestellten Funktionsgruppen eines Videorecorders dienen zum Anfahren der Anfangsstellen der Bandabschnitte eines in Bandabschnitte aufgeteilten Video-Magnetbandes. Es handelt sich um ein Laufwerk 10, eine Bandstanderfassungseinrichtung 11, die den Bandstand des Videobandes einer in das Laufwerk 10 eingesetzten Videokassette 12 erfaßt, um eine Laufwerk-Steuereinrichtung 13 mit Markierungssucheinrichtung 14 und Bandabschnittswertspeicher 15 sowie um eine Betriebsartwähleinrichtung, unter anderem zum Auswählen entweder einer Automatik-Betriebsart, in der die Laufwerks-Steuereinrichtung das Anfahren nur solcher Bandpositionen zuläßt, die um ein ganzzahliges Vielfaches eines fest vorgegebenen Bandabschnittswertes hinter einem Bandaufzeichnungsanfang liegen, oder einer Betriebsart, bei der von Hand Bandpositionen und andere Daten eingegeben werden, die es ermöglichen, Aufzeichnungen vorzunehmen, die nicht an eine Aufteilung in Bandabschnitte gebunden sind.

Für das folgende sei angenommen, die Laufwerk-Steuereinrichtung 13 sei eine solche, die jede in das Laufwerk 10 eingelegte Videokassette 12 zunächst auf ein Inhaltsverzeichnis z.B. am Anfang eines Videobandes abtastet. Der Platz für das Inhaltsverzeichnis befindet sich im dargestellten Ausführungsbeispiel zwischen dem eigentlichen Bandanfang und einem Bandaufzeichnungsanfang, ab dem die erste Aufzeichnung eines Videostückes beginnen kann. Das Inhaltsverzeichnis wird in einen nicht näher dargestellten Verzeichnisspeicher der Laufwerk-Steuereinrichtung 13 eingelesen und auf einem Bildschirm 17 zur Anzeige gebracht, wie in Fig. 3 dargestellt ist. Stellt die Laufwerk-Steuereinrichtung 13 im Programmablauf ihrer Automatik-Betriebsart fest, daß auf dem Videoband noch kein Inhaltsverzeichnis angelegt ist, schreibt sie nach einer vorgegebenen Anfangsbandlaufzeit hinter dem Bandanfang eine erste Anfangsmarkierung auf das Videoband, die den Bandaufzeichnungsanfang festlegt. Wird dann in den Videorecorder eingegeben, was für ein Videostück ab welchem Bandabschnitt aufgezeichnet werden soll, trägt die Laufwerk-Steuereinrichtung 13 den Titel und die Nummer des Bandabschnittes in das Inhaltsverzeichnisses des Verzeichnisspeichers ein und betätigt dann das Laufwerk 10 so, daß dieses das Videoband in der Kassette 12 im Schnellauf auf eine Bandposition transportiert, die um ein ganzzahliges Vielfaches eines Bandabschnittes von beispielsweise jeweils zwei Stunden hinter dem Bandaufzeichnungsanfang liegt. Bei diesem Bandabschnittswert von zwei Stunden wird davon ausgegangen, daß innerhalb dieser Dauer fast alle aufzuzeichnenden Videostücke Platz finden.

Soll z.B. ab dem dritten Bandabschnitt mit dem Aufzeichnen begonnen werden, bedeutet dies, daß zwei Bandabschnitte überspult werden müssen, daß also das Videoband um eine Laufdauer von vier Stunden vorwärtstransportiert werden muß. Ist dagegen der erste Bandabschnitt angewählt, bedeutet dies, daß nach dem Schreiben des Inhaltsverzeichnisses nur bis zum Bandaufzeichnungsanfang gefahren werden muß. Steht das Videoband nicht so, daß gerade das Inhaltsverzeichnis geschrieben oder gelesen wird, sondern steht es z.B. so, daß eine Stelle im vierten Bandabschnitt abgetastet wird, und soll nun der dritte Bandabschnitt angefahren werden, bedeutet dies, daß das Videoband in eine Position gespult werden muß, die um zwei Bandabschnittswerte hinter dem Bandaufzeichnungsanfang liegt. Die Laufwerk-Steuereinrichtung 13 steuert demgemäß das Laufwerk 10 so an, daß es das Band in der Videokassette 12 zurückspult. Während des Zurückspulens wird dauernd die von der Bandstandserfassungseinrichtung 11 ermittelte Bandposition überprüft. Stimmt diese mit dem Doppelten des vorgegebenen Bandabschnittswertes, also mit der Bandposition von vier Stunden Spieldauer überein, wird der Schnellauf des Videobandes gestoppt. Dann wird ein Suchlauf eingeschaltet und mit der Markierungseinrichtung 14 das Band auf die dritte Anfangsmarkierung hin abgetastet. Bei Erreichen der Markierung wird der Suchlauf beendet. Zum Auffinden der Anfangsmarkierung können beliebige Verfahren verwendet werden, wie sie von herkömmlichen Videorecordern her bekannt sind, die dazu in der Lage sind, derartige Markierungen anzufahren.

Bei dem in Fig. 2 dargestellten Videoband ist angenommen, daß in den ersten drei Bandabschnitten jeweils ein Videostück aufgezeichnet ist. Entsprechende Anfangsmarkierungen sind gesetzt. Die Dauer der Videostücke ist dem Benutzer unbekannt. Es sei jedoch angenommen, daß er sich auf der Videokassette markiert hat, daß er drei Videostücke aufgezeichnet hat. Will er ein neues Videostück aufzeichnen, muß er lediglich in den Videorecorder eingeben, daß der vierte Bandabschnitt anzufahren ist. Will er dagegen das Videostück im zweiten Bandabschnitt überspielen, muß er entsprechend eingeben, daß in den zweiten Bandabschnitt aufgezeichnet werden soll.

Besonders hohe Bedienfreudigkeit wird dann erzielt, wenn der Videorecorder so ausgebildet ist, daß er die Verwaltung des Videobandes der eingelegten Videokassette 12 auf der Grundlage des zwischen Bandanfang und Bandaufzeichnungsanfang des Videobandes abgelegten Inhaltsverzeichnisses und der Einteilung des Videobandes in die erläuterten Bandabschnitte übernimmt. Wenn eine Videokassette eingelegt wird, sorgt die Laufwerk-Steuereinrichtung 13 dafür, daß dieses Inhaltsverzeichnis angefahren wird, gelesen wird, in einen Verzeichnisspeicher der Laufwerk-Steuereinrichtung eingespeichert wird und sein Inhalt auf dem Bildschirm 17 dargestellt wird. Das erzeugte Bild sei das von Fig. 3a, also das einer Liste mit drei Titeln und einer Leerzeile. Programmiert der Benutzer nun den Videorecorder in üblicher Weise zum Aufnehmen eines weiteren Videostückes, wird der Titel dieses Videostückes in der bisher noch leeren Zeile zur Anzeige gebracht, was in Fig. 3a nicht dargestellt ist. Entscheidet sich der Benutzer dazu, einen Titel zu löschen, z.B. den zweiten Titel in der Liste gem. Fig. 3a, werden in der Liste nur noch zwei Titel und dafür zwei Leerzeilen zur Anzeige gebracht, wie in Fig. 3b dargestellt ist. Das Videostück auf dem Videoband selbst wird jedoch nicht gelöscht. Vorteilhafterweise wird es auch im Inhaltsverzeichnis des Videobandes und des Verzeichnisspeichers des Videorecorders nicht gelöscht, sondern nur zum Löschen markiert. Unabhängig davon, ob ein Löschen im Inhaltsverzeichnis erfolgt, hat der Benutzer die Möglichkeit, das Stück wieder aufzufinden und es, falls es im Inhaltsverzeichnis gelöscht wurde, in dieses wieder aufzunehmen. Wird ein neues Videostück aufgenommen, wird der Titel des neuen Videostückes in die dritte Zeile der Anzeige eingetragen, die in der Darstellung gem. Fig. 3b noch leer ist. Solange auf dem Videoband noch ein Bandabschnitt frei ist, schreibt der Videorecorder das neue Videostück in einen freien Bandabschnitt ein. Ist das Videoband dagegen voll, fährt der Videorecorder denjenigen Bandabschnitt an, in dem das Videostück aufgezeichnet ist, für das der Befehl "Löschen" markiert wurde. Der Benutzer braucht sich also zu keinem Zeitpunkt darum zu kümmern, an welcher Stelle auf dem Band seine Stücke aufgezeichnet sind. Die Verwaltung des Videobandes übernimmt der Videorecorder auf der Grundlage der oben erläuterten Einteilung des Videobandes in gleichlange Bandabschnitte.

Ein Problem kann sich dann ergeben, wenn ein Benutzer zwei direkt aneinander anschließende Videostücke einer Fernsehsendung aufzeichnen möchte. Ist der fest vorgegebene Bandabschnittswert zwei Stunden und hat das erste aufgenommene Videostück eine Dauer von fast zwei Stunden, werden zum Anfahren des nächsten Bandabschnittes nur wenige Sekunden Bandlaufzeit benötigt, sodaß an der Aufzeichnung des zweiten Videostückes nichts verloren geht. Weist das erste Videostück dagegen nur eine kurze Dauer auf, hat dies zur Folge, daß eine relativ lange Bandlaufzeit vergeht, bis der Beginn des nächsten Bandabschnittes angefahren ist. Dadurch entsteht unter Umständen ein großer Aufzeichnungsverlust am Anfang des zweiten Videostückes. Ist ein derart großer Aufzeichnungsverlust für den Benutzer nicht tragbar, kann er den Videorecorder auf Handbetrieb umschalten, so daß dieser die zwei Videostücke direkt hintereinander aufzeichnet, also für das Aufzeichnen des zweiten Videostückes keinen neuen Bandabschnitt anfährt.

Dauert ein aufzuzeichnendes Videostück länger als es dem vorgegebenen Bandabschnittswert entspricht, werden automatisch zwei Bandabschnitte belegt. Im Inhaltsverzeichnis erscheint dann der zugehörige Titel doppelt. Dies zeigt dem Benutzer an, daß zwei Bandabschnitte belegt werden. Das eine lange Videostück hat dann zwei Nummern.

**Ansprüche**

1. Videorecorder mit
- einem Laufwerk (10) zum Antreiben eines Video-Magnetbandes,
- einer Bandstandserfassungseinrichtung (11) und

- einer Laufwerk-Steuereinrichtung (13) zum Anfahren einer jeweils gewünschten Aufzeichnungsanfangsposition,

**gekennzeichnet durch**

eine Automatik-Betriebsart der Laufwerk-Steuereinrichtung (13), in der sie das Aufzeichnen von Videostücken nur ab solchen Bandpositionen zuläßt, die um ein ganzzahliges Vielfaches eines fest vorgegebenen Bandabschnittswertes hinter einem Bandaufzeichnungsanfang liegen.

2. Videorecorder nach Anspruch 1,

**gekennzeichnet**

- durch einen Programmablauf der Automatik-Betriebsart der Laufwerk-Steuereinrichtung (13), der bei jedem Anfang eines freien Bandabschnittes eine Anfangsmarkierung setzt,
- und durch eine Markierungssucheinrichtung (14), die das Video-Magnetband auf eine gewählte Anfangsmarkierung hin abtastet und bei Erreichen der Markierung einen Suchlauf beendet.

3. Videorecorder nach Anspruch 1 oder 2,

**gekennzeichnet**

- durch einen Verzeichnisspeicher, der Daten über den Inhalt der Bandabschnitte des im Videorecorder befindlichen Video-Magnetbandes enthält,
- und durch einen Programmablauf der Automatik-Betriebsart der Laufwerk-Steuereinrichtung (13), der eine selbsttätige Zuordnung von eingegebenen oder einprogrammierten aufzuzeichnenden Videostücken und für die Aufzeichnung freien Bandabschnitten herstellt.

F i g . 1

F i g . 2

1. Tennis-Wimbledon
2. Dallas
3. King Lear
4. ................

a)

1. Tennis-Wimbledon
2. King Lear
3. ................
4. ................

b)

F i g . 3